Europäisches Patentamt

European Patent Office

Office européen des brevets

(19)

(11) Publication number: **0 265 026**

**A1**

(12) **EUROPEAN PATENT APPLICATION**

(21) Application number: 87202026.8

(22) Date of filing: 21.10.87

(51) Int. Cl.⁴: **B23B 29/034**

(30) Priority: 24.10.86 NL 8602666

(43) Date of publication of application:
27.04.88 Bulletin 88/17

(84) Designated Contracting States:
DE FR GB IT

(71) Applicant: **N.V. Philips' Gloeilampenfabrieken**
**Groenewoudseweg 1**
**NL-5621 BA Eindhoven(NL)**

(72) Inventor: **Kraakman, Hillebrand Johannes**
**Josephus**
**c/o INT. OCTROOIBUREAU B.V. Prof.**
**Holstlaan 6**
**NL-5656 AA Eindhoven(NL)**
Inventor: **Savenije, Johannes Herman**
**c/o INT. OCTROOIBUREAU B.V. Prof.**
**Holstlaan 6**
**NL-5656 AA Eindhoven(NL)**

(74) Representative: **Rooda, Hans et al**
**INTERNATIONAAL OCTROOIBUREAU B.V.**
**Prof. Holstlaan 6**
**NL-5656 AA Eindhoven(NL)**

(54) **Machining apparatus.**

(57) A machining apparatus comprising a frame (25) and a first shaft (1), which is rotatably journalled therein and one end of which projects from the frame and carries in situ a chisel clamping device (2), while its other end (3) is fixedly clamped in a further hollow shaft (4), which surrounds a part of the first shaft with a certain amount of clearance, the first shaft (1) and/or the inner circumference of the hollow shaft (4) being provided with four bearing chambers (5, 6, 7, 8) equidistantly distributed along the centre line, one of these bearing chambers (5) communicating with a supply of bearing medium at a controllable supply pressure and the bearing chamber (6) arranged diametrically opposite thereto communicating with a space (27) filled with bearing medium at a constant lower pressure, while the two remaining bearing chambers (7, 8) each communicate with a source of bearing medium, the hollow shaft being journalled so as to be radially movable in the frame.

### "Machining apparatus"

The invention relates to a machining apparatus comprising a frame and a first shaft, which is rotatably journalled therein and one end of which projects from the frame and carries in situ a chisel clamping device.

Machining apparatuses of the kind to which the present invention relates are known and are used for internally machining the wall of hollow cylindrical spaces. The work-piece is then mostly fixedly stretched and the shaft with the chisel performs a rotary and translatory movement along the work-piece. After each operation, the chisel must be adjusted to a new depth, which is mostly effected by complicated mechanical auxiliary means. Especially for very accurate machining operations, these mechanical adjustment means often leave much to be desired.

The invention has for its object to provide an apparatus by which an accurate chisel adjustment can be obtained in a simple manner and very rapidly and in which the chisel adjustment remains stable even at large forces.

The machining apparatus according to the invention is characterized in that the said first shaft is fixedly clamped with its end remote from the chisel clamping device in a further hollow shaft, which surrounds a part of the first shaft, the first shaft and/or the inner circumference of the hollow shaft being provided with four full film bearings equidistantly distributed along the centre line, one of these bearings communicating through a duct with a supply of bearing medium at a controllable supply pressure and the bearing arranged diametrically opposite thereto communicating through a duct with a space filled with bearing medium at a constant lower pressure, while two remaining bearings each communicate with a source of bearing medium, the hollow shaft further being journalled so as to be radially movable in the frame.

In a further favourable embodiment of the apparatus according to the invention, the hollow shaft is journalled so as to be also axially movable and is provided with a piston body, which is accommodated in a cylinder, the space on one side of the piston communicating with a controllable medium supply.

Thus, an apparatus is obtained, in which the chisel can be controlled with a high degree of accuracy both in radial direction and in axial direction by means of medium supply.

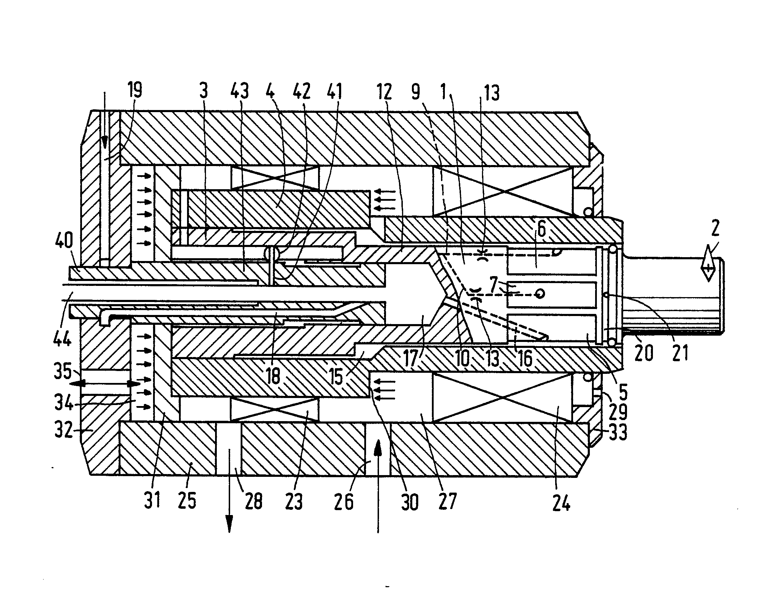

The invention will be described more fully with reference to the drawing, which shows diagrammatically in sectional view an embodiment of a machining apparatus.

In the drawing, reference numeral 1 denotes a shaft, one end of which carries a chisel clamping device 2. The other end 3 of the shaft 1 is clamped in a hollow shaft 4. The hollow shaft 4 surrounds a part of the shaft 1 with a certain amount of clearance, the shaft 1 being provided at an area located at a certain distance from the end 3 with four bearing chambers 5, 6, 7 and 8 equidistantly distributed along its circumference (8 being not shown in the drawing).

Each of the bearing chambers 6, 7 and 8 communicates through a duct 9, 10 and 11, respectively (not shown), and a restriction 12, 13 and 14, respectively (not shown), with a space 15 for the supply of bearing medium.

The bearing chamber 5 communicates via a duct system 16, 17, 18, 19 with a supply (not shown) of bearing medium at a controllable pressure. The shaft 1 is further provided with an annular groove 20, which is provided with a drain 21 for draining bearing medium from the chambers 5, 6, 7 and 8.

The hollow shaft 4 is journalled at two areas 23 and 24 in a housing 25, which surrounds the assembly. The bearings at the areas 23 and 24 are hydrostatic bearings, which allow both a rotation and a translation of the hollow shaft 4 in the housing 25. For the supply of medium to the bearings 23, 24, the housing 25 is provided with a medium supply opening 26, which can be connected to a source for medium at high pressure. This medium is supplied to the space 27 between the bearings 23 and 24 and flows through the two bearings to the drains 28 and 29 on the other side of the bearings 23 and 24, respectively.

The space 27 communicates through one or more openings also with the space 15, with which the ducts 9, 10 and 11 for the supply of medium to the bearing chambers 6, 7 and 8 communicate.

The hollow shaft 4 is of stepped construction with a diameter transition at the area 30.

Further, the hollow shaft is provided with a part 31, which is adapted to move as a piston in the housing 25. The housing 25 is closed at its both end faces with covers 32 and 33, respectively.

The space 34 between the piston 31 and the cover 32 is filled with a pressurized medium and communicates via an opening 35 with a device (not shown), by which a larger or smaller quantity of medium can be introduced into the space 34. The supply and drain of pressurized medium at the piston 31 ensures the axial displacement of the hollow shaft 4 together with the shaft 1 clamped therein and the chisel 2.

The rotary movement of the shaft 1 can be effected in different ways. In the embodiment, a slide portion 40 is passed into a bore in the shaft 1 and is slidably movable therein. This slide portion 40 is provided with three pins 41 (only one of which is shown in the drawing), which project radially outwards and are each provided with a cylindrical body 42, which is accommodated in an axially extending slot 43 in the inner circumference of the shaft 1.

The slide portion 40 is further connected via a slack torsion shaft 44 to a driving device (not shown). Thus, any vibrations of the driving device will practically not be passed on to the shaft 1.

The operation of the apparatus shown is as follows.

When the torsion shaft 44 is driven, the assembly of hollow shaft 4 and shaft 1 and hence the chisel 2 is caused to perform a rotary movement.

The axial movement of the chisel 2 is obtained in that a larger or smaller quantity of medium is introduced via the opening 35 into the space 31.

A radial displacement of the chisel 2 is obtained in that via the ducts 19, 18, 17 and 16 the pressure of the medium in the bearing chamber 5 and hence the load on the oppositely arranged bearing chamber 6, in which a constant pressure is maintained, is controlled.

This control principle is based on the fixed relation existing between the gap height of a hydrostatic bearing and the load on this bearing. This means that, when the load on the bearing chamber 6 is varied by varying the pressure in the bearing chamber 5, the gap height of the bearing 6 will vary according to a fixed known relation.

A variation of the gap height of the bearing 6 also involves a radial displacement of the chisel 2. Thus, it is possible to cause the chisel 2 to perform a radial displacement very rapidly and very accurately.

## Claims

1. A machining apparatus comprising a frame and a first shaft, which is rotatably journalled therein and one end of which projects from the frame and carries in situ a chisel clamping device, characterized in that the said first shaft is fixedly clamped with its end remote from the chisel clamping device in a further hollow shaft, which surrounds a part of the first shaft with a certain amount of clearance, the first shaft and/or the inner circumference of the hollow shaft being provided with four bearing chambers, which are distributed equidistantly along the centre line, one of these bearing chambers communicating through a duct with a supply of bearing medium at a controllable pressure and the bearing chamber arranged diametrically opposite thereto communicating through a duct with a space filled with bearing medium at a constant lower pressure, while the two remaining bearing chambers each communicate with a source of bearing medium, the hollow shaft being journalled so as to be radially movable in the frame.

2. An apparatus as claimed in Claim 1, characterized in that the hollow shaft is journalled so as to be also axially movable and is provided with a piston body, which is accommodated in a cylinder, the space on one side of the piston communicating with a controllable medium supply.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 485 983 (FEDERAL-MOGUL WEST WIND AIR BEARINGS) * Page 1, lines 71-98; page 2, lines 1-25; figures * | 1 | B 23 B  29/034 |
| A | DE-A-2 007 813 (VOLKSWAGEN) | 2 | |

TECHNICAL FIELDS
SEARCHED (Int. Cl.4)

B 23 B  29/00
B 23 Q   5/00

The present search report has been drawn up for all claims

| Place of search | Date of completion of the search | Examiner |
|---|---|---|
| THE HAGUE | 05-01-1988 | BOGAERT F.L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)